Europäisches Patentamt

(19) European Patent Office

Office européen des brevets

(11) Publication number : **0 360 543 B1**

(12) **EUROPEAN PATENT SPECIFICATION**

(45) Date of publication of patent specification :
26.10.94 Bulletin 94/43

(51) Int. Cl.⁵ : **H02J 13/00, H04L 25/02**

(21) Application number : **89309475.5**

(22) Date of filing : **19.09.89**

(54) **Power line communications system.**

(30) Priority : **20.09.88 GB 8822121**

(43) Date of publication of application :
**28.03.90 Bulletin 90/13**

(45) Publication of the grant of the patent :
**26.10.94 Bulletin 94/43**

(84) Designated Contracting States :
**AT CH DE FR GB LI SE**

(56) References cited :
**EP-A- 0 102 682**
**DE-A- 2 733 875**
**GB-A- 2 072 467**
**GB-A- 2 160 747**
**US-A- 4 413 250**
**EDN ELECTRICAL DESIGN NEWS, vol. 26, no.
7, 1 April 1981, Newton, Massachusetts, US,
pp. 268-270 ; Dale Pippenger : "One wire
handles power, data and timing"**

(73) Proprietor : **Honeywell Control Systems Ltd.
Honeywell House
Charles Square
Bracknell Berkshire RG12 1EB (GB)**

(72) Inventor : **Jennow, John
32 Grand Tully Drive
Kelvindale Glasgow G2 Scotland (GB)**
Inventor : **McAslan, Steven Bruce
27 Cathness Road
Brancum Hall Estate
East Kilbride Scotland (GB)**

(74) Representative : **Fox-Male, Nicholas Vincent
Humbert
Honeywell Control Systems Limited
Charles Square
Bracknell Berkshire RG12 1EB (GB)**

## Description

This invention relates to a power line communications system and more particularly to a D.C. power line communications system.

It is economical to employ a single bus to transmit both power and information but difficulties arise in ensuring the correct conditions for the respective transmissions. It is known, for example from US-A-4,471,399, US-A-4,392,121 and US-A-4,300,126, to transmit information along an A.C. power line but this involves detecting the zero crossings, at which points no power is being transmitted, which is relatively complex and the system is dependent on accurate detection.

In US-A-4,413,250 there is disclosed a communication system comprising a D.C. power line connecting a central station to a remote station, the current through the voltage regulator being varied in magnitude in accordance with a message to be transmitted. A generally similar arrangement is disclosed in US-A-4,450,571. In US-A-4,621,170 unipolar current impulses are superimposed upon the D.C. supply voltage but this necessitates the use of a bridge rectifier.

In US-A-4633217, there is disclosed a DC communications system in which both power and communication signals are transmitted over the same line but this is achieved by the use of first and second variable impedance elements to maintain constant the current flow through a series impedance while transmitting data over a transmission line.

In EP-A2-0102682, there is disclosed a DC communications system which employs three-level bi-polar signalling providing analogue and digital communication in a two-wire link. The system provides only sequential polling of the subcontroller nodes.

UK Patent Specification No. 2072467 discloses a two wire data transmission system with a plurality of communication nodes connected to a bus. Each communication node has its own D.C. power supply consisting of a diode-rectified A.C. supply. The power transmission facilities are inadequate to power all, or even some, of the nodes.

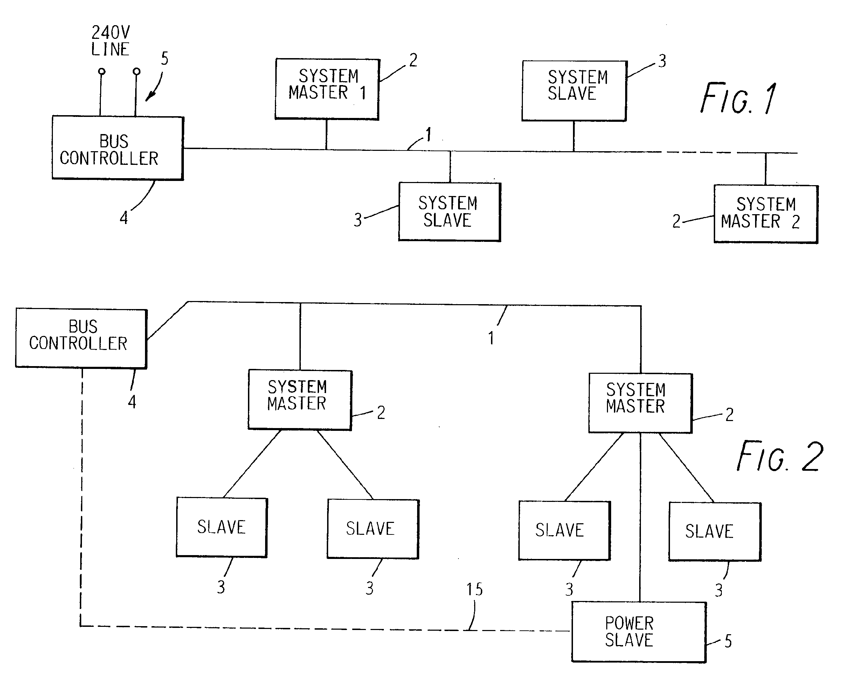

German Patent Specification No. 2733875 discloses a two-wire data transmission system in which the power for effecting signalling is provided by stored charge in the slave unit, as shown by the exponential decay of Figure 2.

None of the above prior art enable the powering of devices of widely varying characteristics by a D.C. power line communications system of simple format.

According to the present invention there is provided a D.C. power line communications system comprising a two-wire communications bus, a D.C. supply source connected to the bus, a plurality of communication nodes connected to the bus, means for varying the D.C. source impedance of the bus between two values, whereby, when the bus D.C. source impedance is at the lower of said two values, power can be transmitted from the D.C. supply source to the communication nodes, characterised by means to transmit only data signals along the bus from one communication node to another when the bus is at the greater of the two D.C. source impedance values, the data transmission means having means to send a low voltage signal by applying, across the bus, a D.C. impedance lower than the greater of the two bus D.C. source impedance values and also having means to send a higher voltage signal by removing said D.C. impedance across the bus, the means for varying the source impedance comprising bus controller means operable to schedule the bus between power and data transmissions, means to provide temporal variation in the scheduling of the power and data transmissions to permit operation of communication nodes of widely differing power loads, and storage means operable to store power when the bus source impedance is low, and to discharge stored power to at least one communication node when the bus source impedance is at the greater of said two values, whereby at least said one communication node is always connected to one power supply or another.

Preferably, the temporal variation means comprises means to increase the duration of one or more power transmissions, and/or means to decrease the time separation between one or more power transmissions; advantageously, the temporal variation means is operable in accordance with instructions from the communications nodes.

Thus, the system has the facility of adjustably controlling the power transmissions, whereby the scheduling can be altered such as to accommodate high power components used at the communication nodes, for example by extending the duration of the power transmissions, and/or making them more frequent and/or by using them more frequently for particular nodes. The system has the capability of a scheduler with an adjustable control so that the schedule procedure need not be set up until the system is being installed whereby the procedure can be matched to the particular requirements of the components to be used in the communication nodes; once the schedule procedure has been so set up, it can remain fixed or it can be modified or supplemented by instructions from the communication nodes.

In this way, the system is readily able to utilise a much wider range of components (e.g. flashing beacons, motorised valves and other valve actuators) in its communications nodes than was possible with the prior art systems mentioned hereinbefore. Moreover, the system is able to operate such as to ensure that the power supplied at any given time matches the instantaneous power requirement, this also not being achieved by the prior art systems. Furthermore, the invention achieves all this while minimising the response time of the system.

Preferably, the system includes means for modulating the voltage of the D.C. source, whereby an electrical load may be imposed on the communication bus.

Preferably, the bus controller means is provided with transmission means and receiver means for communicating with the communication nodes, and data processor means operable to provide the timing for the periods of power transmission and the periods of data transmission. This provides a practical, simple and efficient implementation of the present invention.

Preferably, the means for varying the source impedance comprises transistor means which provides said first value of source impedance when rendered conductive and provides said second value of source impedance when rendered non-conductive, and/or the storage means comprise capacitive means which are arranged to be charged during power transmissions and discharged during data transmissions.

The system may incorporate at least one D.C. load connected to the bus and having a first impedance value, means for varying the DC source impedance between a second impedance value which is greater than said first impedance value and a third impedance value which is less than said first impedance value, and means for varying the voltage of the DC source between a first voltage level when the source impedance is at said second impedance value and a second voltage level when said source impedance is at said third impedance value, the second voltage level being greater than said first voltage level, whereby data can be transmitted along the bus in the presence of said DC load when the source impedance is modulated between said second impedance value and third impedance value and the source voltage is modulated between said first voltage level and second voltage level.

The DC load may be, for example, an electric motor which can be driven continuously (albeit by pulses) when power is transmitted along the bus during data transmissions. The means for modulating the impedance of the DC source may comprise transistor means, as before, and the means for modulating the voltage of the DC source may also comprise transistor means. The transistor means for effecting impedance or modulation may comprise a pair of transistors one of which is switched on and off by the inverse of a data signal, this transistor in turn controlling the other transistor. The transistor means for modulating the voltage of the DC source may comprise a single transistor controlled by the data signal and connected across the communications bus. Thus, when this transistor is switched on and is conducting, it effectively shorts the communications bus, whereby the latter sees a voltage equal approximately to zero. The transistor means for effecting impedance or modulation may comprise a pair of transistors one of which is switched on and off by the inverse of a data signal, this transistor in turn controlling the other transistor. The transistor means for modulating the voltage of the DC source may comprise a single transistor controlled by the data signal and connected across the communications bus. Thus, when this transistor is switched on and is conducting, it effectively shorts the communications bus, whereby the latter sees a voltage equal approximately to zero.

In order that the present invention may more readily be understood, a description is now given by way of example only, reference being made to the accompanying drawings, in which:

Figure 1 is a general block diagram of a powerline communications system which embodies the present invention,

Figure 2 is a block diagram illustrating the function of the overall system,

Figure 3 is a schematic circuit diagram of one of a plurality of communication nodes forming part of the system,

Figure 4 is a schematic circuit diagram of a bus controller of the system,

Figure 5 illustrates the output of the bus controller of Figure 4,

Figure 6 illustrates a form of code used in the system,

Figure 7 is a circuit diagram of part of an alternative embodiment,

Figure 8 is an explanatory waveform.

Figure 9 is a circuit diagram of part of the system of Figure 1,

Figure 10 is a diagram of the data flow during an operation of the system, and

Figure 11 is a block diagram showing an installation of the system.

Referring to Figure 1, the communications system comprises a communications bus 1 in the form of a twisted pair of wires and to this bus is connected a plurality of communication nodes in the form of system masters 2 and system slaves 3, the numbers of each of which can be varied as required by a given system. Also connected to the bus 1 is a bus controller 4 to which is connected a power line 5. Figure 2 illustrates the functional topology of the system of Figure 1.

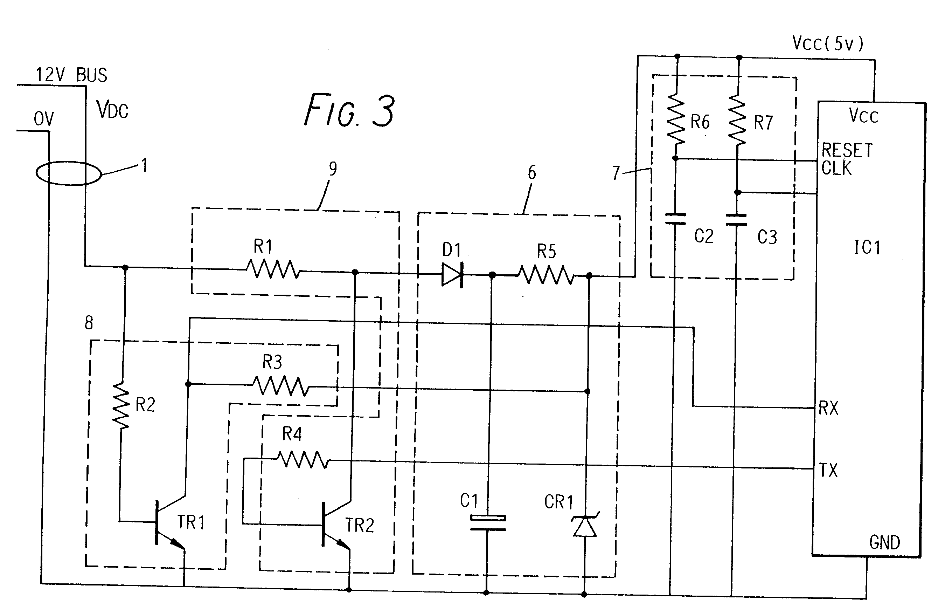

The bus controller 4 is arranged to provide a D.C. voltage source Vdc of 12 volts on the bus 1, which voltage is thus available to each communication node as required. Figure 3 illustrates one communication node as regards the components necessary to implement the present invention but does not include specific application components such as relay drivers and analogue-to-digital converters, for example. Each communication node comprises a power supply circuit 6, a processor support circuit 7, a receiver circuit 8 and a transmitter circuit 9.

Each power supply circuit 6 comprises a diode D1, a capacitor C1, a resistor R5 and a current regulator CR1. The components C1 and CR1 are each connected across the two lines (0v and 12v) of the bus 1 to respective ends of R5, with D1 being connected in series with R5. The power supply circuit 6 operates to convert the 12 volt supply on the bus 1 to a 5 volt supply Vcc for a single chip processor IC1. The capacitor acts as a power storage device or reservoir, storing up charge whenever power is supplied along the bus 1. The current regulator CR1 regulates the supply voltage to the processor IC1 to 5 volts.

The processor support circuit 7 comprises two RC networks R6, C2 and R7, C3 connected in parallel across the bus 1 and providing power-on reset facilities and an RC oscillator for the processor IC1.

As a communication node must be able to receive any information transmitted on the bus 1, the receiver circuit 8 is provided and this comprises a transistor TR1, the base of which is connected to the 12 volt line of the bus 1 via a resistor R2, the collector of which is connected to the receive (RX) terminal of the processor IC1, and the emitter of which is connected to the 0v-line of the bus and to the ground (GND) terminal of the processor. In operation of the receiver circuit 8, levels of 12v on the bus 1 are inverted to 0v (logic ZERO) for the processor IC1, and 0v levels on the bus are inverted to +5v (logic ONE), whereby the processor IC1 can receive any signals which are transmitted along the bus.

The transmitter circuit 9 of each communication node allows that node to transmit information onto the bus 1 from its processor IC1 and each transmitter circuit comprises a transistor TR2 the base of which is connected via a resistor R4 to the transmit (TX) terminal of the processor IC1, the collector of which is connected to the downstream end of a resistor R1 connected in series with the 12v line of the bus 1, and the emitter of which is connected to the 0v line and to the GND terminal of the processor IC1. The resistor R1 has a value much less than a resistor R10 described hereafter and serves to protect the transistor TR2 from damage. TR2 operates in the manner of a switch. When the transistor TR2 is "open", i.e. not conducting, the bus 1 is allowed to stay at 12v with a logic ZERO at the TX terminal of the processor IC1. When the transistor is "closed", i.e. conducting, the bus voltage is pulled down to 0v with a logic ONE at the processor terminal TX. Thus by setting the processor terminal TX high (5v) or low (0v), the voltage on the bus 1 is brought low (0v) and high (12v), respectively. In this way, each communication node can transmit information to each other node in the system.

From the description so far, it would appear that each communication node can simultaneously receive power and perform communication functions (receive or transmit information) but this is not the case and in fact the bus 1 is scheduled between transmitting power and transmitting information in accordance with the present invention. In the illustrated embodiment, this scheduling is set to a basic procedure with alternate periods of 3 milli-seconds of power transmission followed by 5 milli-seconds of information transmission but with scheduling being modified upon specific requests from the communication nodes. If a component (e.g. a sensor or a motorised valve) is added to a node or taken from a node, or if the system configuration is altered in some other way, then the values of this basic procedure for scheduling can readily be changed. As already mentioned, during the power transmission period, the capacitor C1 of each communication node is charged to a value which will provide the necessary power to the associated node when allowed to discharge during the subsequent period (5 milli-seconds) of information transmission by that of another node.

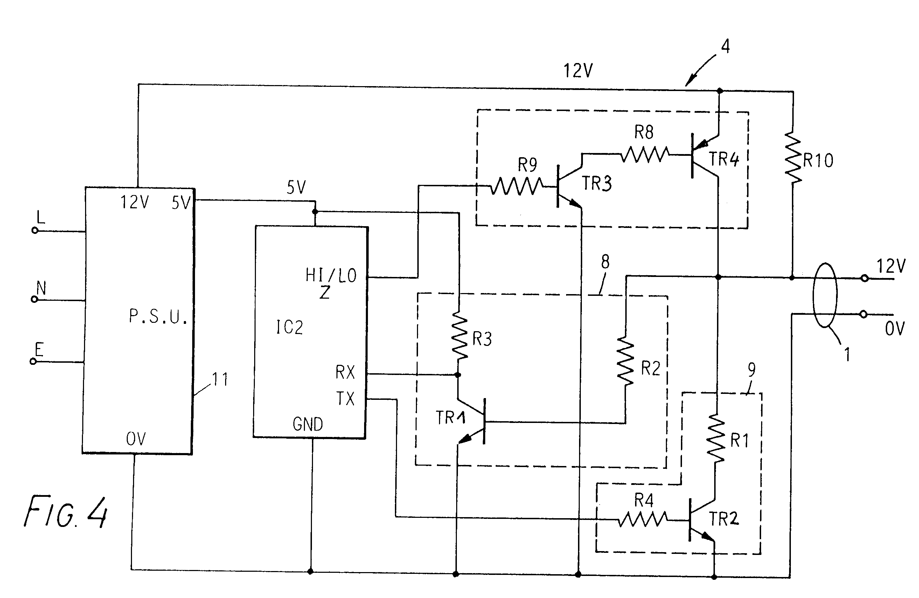

The control of this scheduling between power and information transmissions is effected by the bus controller 4, a circuit diagram of which is shown in Figure 4 of the drawings. The functions of the bus controller 4 are to provide power on the bus 1 and to provide timing as between power and information transmissions, which timing can be altered to meet the power requirements at that given instant for the particular configuration being used. Basically, the bus controller 4 is provided with similar receiver and transmitter circuits 8 and 9 to those of each communication node and similar reference numerals and letters are used in conjunction therewith. The bus controller also comprises a power supply unit 11 which receives mains power and provides the 12v supply to the bus 1, and a processor IC2.

The processor IC2 provides the timing for the periods of power and information transmissions on the basis of the source impedance of the bus 1. During the periods of power transmission, the bus source impedance is held low, in fact virtually at the output impedance of the 12v supply in the illustrated embodiment. Power (12v) is supplied to the bus from the power supply unit 11 via a power transistor TR4 which is fully conducting in this mode.

The bus source impedance is set high (of the order of 1K ohm) when supplying voltage to the bus for information transmission. The change in bus source impedance is achieved using an impedance conditioning

4

circuit 12 comprising the power transistor TR4, a resistor R8 connected between the base of the transistor TR4 and the collector of a further transistor TR3 forming part of the impedance conditioning circuit. The emitter of TR3 is connected to the 0v line of the bus 1 and the base is connected to the Hi/Lo impedance (Z) terminal of the processor IC2 via a resistor R9 which also forms part of the impedance conditioning circuit. The components R8, R9 and TR3 buffer the processor IC2 from the relatively high bus current required to turn on transistor TR4, which current is supplied when the Hi/Lo Z terminal voltage of the processor IC2 is high (5V), the power transistor TR4 is turned on, and the 12v supply is passed to the bus 1. When the Hi/Lo Z terminal voltage is low (0v), power transistor TR4 is turned off and the 12v supply is passed to the bus via a resistor R10 having a value of the order of 1K ohm, whereby the current available to the bus 1 is severely limited (a maximum of 12mA for a direct short circuit).

Thus it will be seen that a high bus source impedance limits the output current to the bus 1 and this impedance "modulation" is the method used by which the communication nodes can alter the voltage level of the bus 1 and thus achieve communications. It will be understood that while the bus source impedance is high (1 K ohm), any node transmission transistor TR2 which is in the "switch closed" mode will bring the bus voltage down to a very low value. In the basic scheduling procedure, the processor IC2 is arranged to switch the bus 1 to the power transmission node for 3 milli-seconds (12v at 2 amps) and then to the information (data)transmission node for 5 milli-seconds (12v at less than 12mA). Power transmissions according to that scheduling may not be adequate for some components which require high power input or need prolonged driving (e.g. flashing beacons and motorised valves) and therefore the basic scheduling procedure of the bus controller can be adjusted, and also the scheduling operation of the bus controller can be modified to accommodate specific requests for powering from the communication nodes.

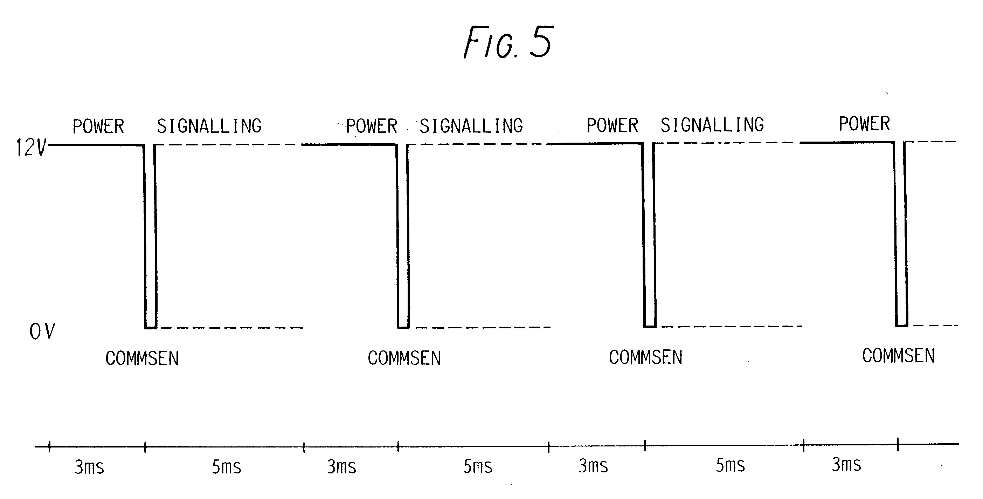

The bus controller 4 has a further task to perform by way of advising when a communication node can transmit information. This is necessary since the difference between power transmission and information transmission is merely the level of the bus source impedance and the communication nodes may have difficulty in deciding when it is safe to communicate. This task is achieved by the processor IC2 transmitting a single bit along the bus 1, which is termed the communication enable bit or COMMSEN bit. The COMMSEN bit takes the form, in the illustrated embodiment, of a 0v pulse of about 250 µs duration immediately following the termination of a power transmission period. Figure 5 illustrates the output signal of the bus controller 4 from which can be seen the alternate periods of 3 milli-seconds and 5 milli-seconds of power transmission and information transmission, respectively, with the COMMSEN bit being transmitted at the end of the former and beginning of the latter. The information transmission output is shown by a broken line as this is dependent on the communications software.

The communications software can be divided into sections:-
1. The highly time-dependent core of code which actually transmits the ONE's and ZERO's of a message.
2. The formatting and correcting code which allows a communication node to transmit and receive intelligible messages.

## Transmission/Reception code

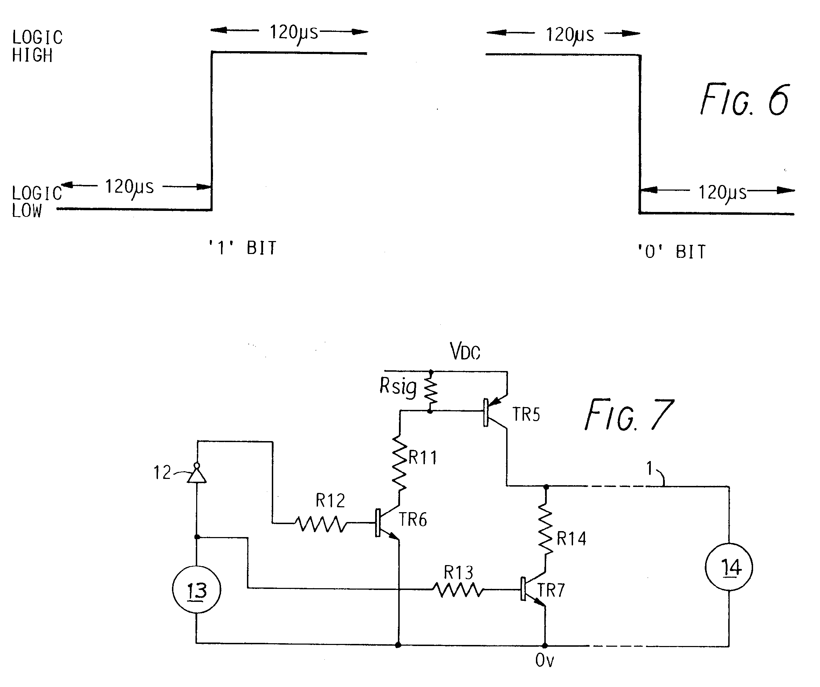

This code, which in one example is 178 bytes long, transmits the digits in the processor memory, or stores received digits in the memory. Since 4-bit single chip processors, such as used for IC1, tend to be slow and have timing inaccuracies, the signalling method chosen was Manchester coding. Each bit is 240µs long and there are nineteen bits transmitted after the COMMSEN bit. In Manchester coding, bits are characterised by changes in level rather than absolute levels, as illustrated in Figure 6. The characteristic "edge" seen in every bit allows each receiving communication node to resynchronise itself to the transmission frequency.

The system also features a "collision detect" mechanism in the software and this code checks the data which a node is transmitting and ensures that the bus is identical to this. If it is not, then the node will immediately cease transmission.

It is important to bear in mind that at this level the software is unaware of what the bits actually mean. As far as the relevant processor IC1 is concerned, this is merely a random sequence of 1's and 0's. The input and output from this kernel is examined for "meaning" by the processor "intelligent" software once it has been checked and formatted.

## Checking and Formatting Code

This software is at a slightly higher level than that described above and is executed during the 3 milli-seconds power transmission period. When a communication node has just received a communications burst, it checks that the burst was intelligible, that it was intended for that node and then sets it into a format which allows further processing and decision making.

If a node is about to transmit a message, then the information to be transmitted is set into a format which the lower level transmission code can use. Clearly, if communications are going to be successful a standard format must be adopted by all modes, and this format is as follows:

1) Each 5 milli-seconds of communications is taken up with one node transmitting.

2) The information transmitted is referred to as a "frame".

3) Each frame consists of nineteen bits preceded by the COMMSEN bit.

4) Sixteen of those 19 bits are the information carrying segment of the frame. The remaining three bits are for ensuring and checking correct reception.

5) The information bits are broken down into:

4-bit COMMAND field

8-bit ADDRESS field

4-bit DATA field

6) The three "checking bits" are START, STOP and PARITY bits.

Turning to the information bits first, the four-bit COMMAND field is used to characterise the frame. For example, this field can order a node to perform some function or perhaps request information. The ADDRESS field allows individual nodes to be communicated with, each node having a unique "address" and only responding to frames bearing that address. Particular information about the status of a node, or required status, is carried in the DATA field. The representation of the information in this field need only be agreed on by the nodes to which it is relevant.

The three additional bits provide for correct reception of each frame. A START bit is placed at the beginning of each frame and informs all receivers 8 that the COMMSEN bit has stopped and that the frame has begun. This bit is always a logic ONE. A STOP bit is placed at the end of the frame and is always a logic ZERO and permits an easy transition back into the 3 milli-second power cycle and provides a useful check that the frame has been received properly.

The PARITY check bit is used to ensure that the frame has been correctly received. This bit is set to a value such that the number of 1's in the information segment of the frame is always odd. In this way if an even number of 1's is received the receiver node knows that an error has occurred.

The software which deals with this level of the communications transfer will either take the 16-bit information segment and add correct PARITY, START and STOP bits, or will check the received frame for PARITY, START and STOP bit correctness, then strip these bits off so that the next level of software can make some use of the others. This next level is referred to as the Protocol Level.

## Protocol Level Software

At this level some of the "usefulness" of communication becomes apparent. Communication nodes can send and expect to receive usable information and make decisions based on the same. Also at this level the decision on which node may transmit at each particular time is made. As shown in Figure 2, the system features a dual master-slave protocol. Each master 2 acts as the co-ordinator/controller of a system, and each slave 3 acts as a "remote" to its own particular master, collecting information about its environment and signalling that to the master when instructed to do so.

Each master 2 is allowed to communicate with its system only under strictly controlled circumstances which are embodied within a concept of a software "token", the features of which are:-

a) Only one token may exist on the bus at any time.

b) Only one master may hold the token at any one time.

The master 2 which holds the token is the only one which is allowed to communicate with its sub-system and communication takes the form of polling slaves 3 for information and receiving replies. The replies may then influence the behaviour of the master 2 from then.

When a master 2 has completed a set of operations, such as polling all its slaves 3, it passes the token to the other (or another) master 2 and then waits until the token is passed back to it. The second master will similarly poll its slaves 3 and once this polling is complete pass the token on or back, as appropriate. This sequence is carried out indefinitely.

Token passing is achieved through the following sequence:

1) Token pass frame.

2) Token acknowledgement frame.

3) "Null frame" - no communications.

The null frame consists of only the COMMSEN bit from the bus controller 4.

"Token Pass" and "Token Acknowledgement" frames are characterised by particular COMMAND fields.

EP 0 360 543 B1

Other command fields may be "Master to Slave Poll"; "Slave Acknowledgement"; "Power Required"; "Power On"; "Power Off". The last three of these fields are appropriate to situations involving the powering of actuators, etc directly from the bus 1, which is achieved by "stretching" the limited 3 milli-second power burst to 5 seconds (or other suitable increment). During this 5 second period, no communications can occur and 12v at 2A is provided to the bus 1.

At the protocol level the sequence of events is as follows. Firstly a master 2 decides that one of its slaves 3 requires power. This slave 3 is enabled to receive power by changing its effective address to a "universal" value. Next a "Power Required" frame is sent to the bus controller 4 from the master 2. The next few steps are termed "POWERCOMM" and involve direct communication between the bus controller and individual slaves 3. Immediately after the bus controller 4 receives a "Power Required" frame, it will transmit a frame of "Power On" type. At this, all communication nodes which have been enabled will turn on their power circuits 6; 5 seconds of power then follows while the actuators, etc consume energy.

Next, the bus controller 4 transmits a "Power Off" frame. This transmission is special: since the bus 1 is being loaded by power devices, clearly normal high impedance signalling is not possible. Therefore, this frame is actually transmitted by modulating the bus source impedance high and low.

Once all power devices have been turned off, the last master 2 to hold the token returns to its normal slave poll or to token pass routine.

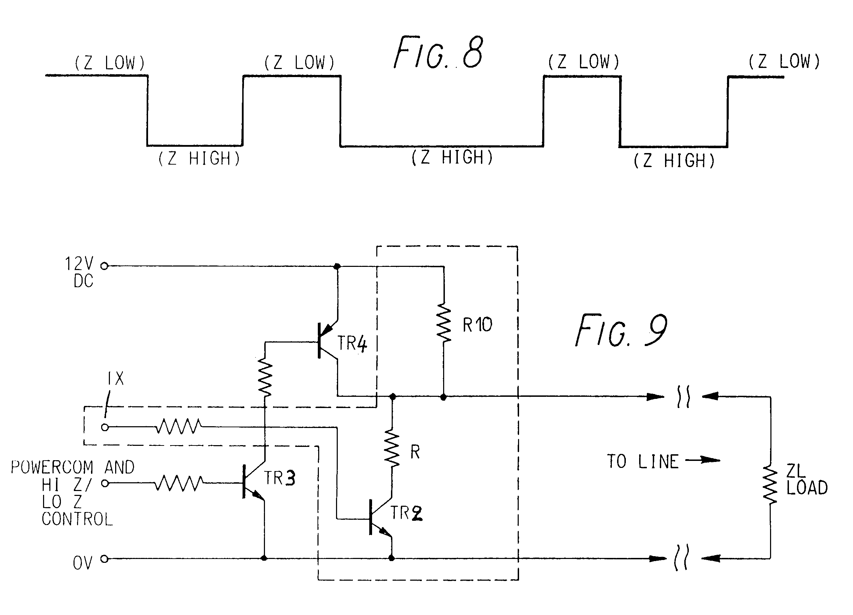

Figure 9 shows the circuitry within bus controller 4 associated with the POWERCOMM transmission and is the same as the POWER/COMMS multiplex circuit. During POWERCOMM both TRI and TR2 are "ON", implying that the source impedance of the bus is simply that between the collector and emitter of TR1, thereby providing a high current to line.

To signal the end of the POWERCOMM period, the circuitry within the dotted line of Figure 9 is utilized as follows:

(1) TR3 and TR4 are turned "off" by taking the Hi Z/Lo Z line "low".

(2) With $Z_L$ still across the bus and satisfying $R_{10} >> Z_L$, the bus voltage collapses (as predicted by the potential division) to $\sim$ov.

(3) Simultaneously with (2), TR2 is turned "ON" ensuring that the bus voltage approaches zero.

(4) The devices across the bus reorganise this "NULL" frame as the end of POWERCOMM.

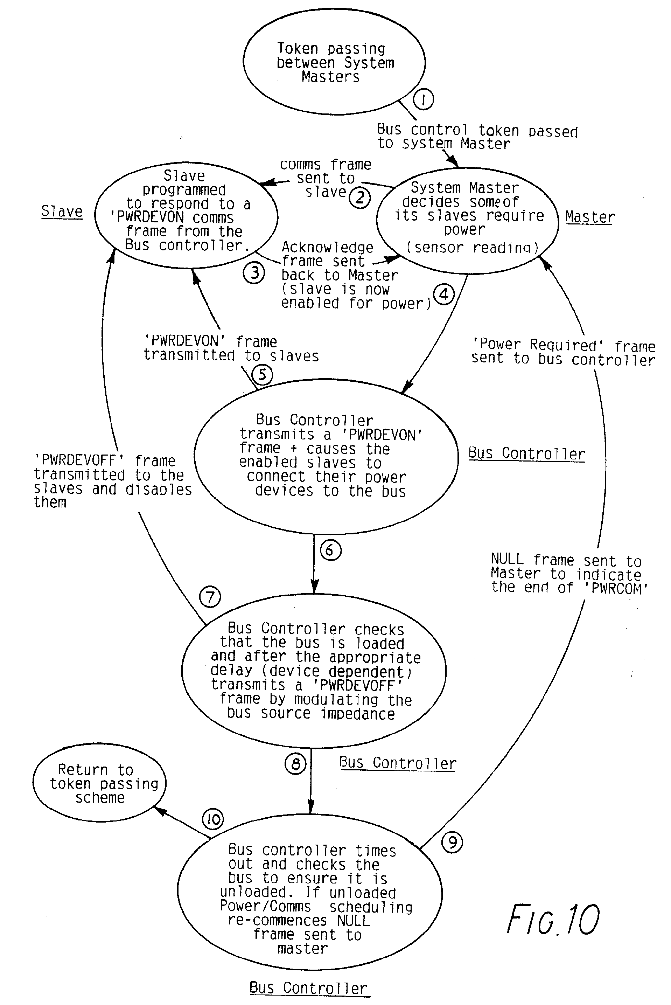

The length of the POWERCOMM period is typically from 1 second to 30 seconds for efficient control of prolonged operation devices in the nodes while ensuring that the system as a whole maintains effective operation; the control software implements the length of the POWERCOMM period in the manner indicated in Figure 10 and is not limited to a range of time intervals and could readily achieve a period of a number of minutes if deemed necessary (and practicable) for the system.

In Figure 10, PWRDEVON is an abbreviation for "POWER DEVICES ON LINE" ie. the bus controller instructs the slave requiring power to switch load onto the bus and PWRDEVOFF is an abbreviation for "POWER DEVICES OFF-LINE" ie. an instruction to take load off the bus.

With the system shown generally in the Figures, data transmission is performed while the bus impedance is high. This means that communications are not possible with any electrical load on the bus such as, for example, an electric motor. However, by the simple expedient of modulating the voltage of the D.C. source as well as modulating the D.C. source impedance, communications become possible.

Figure 7 illustrates this alternative arrangement and shows a simplified circuit diagram of the bus controller 4. The bus controller 4 comprises a first transistor TR5 of the pnp type with the emitter thereof being connected to the source of DC voltage Vdc, the collector thereof being connected to the collector of a transistor TR6 of the npn type via a resistor R11. The emitter of the transistor TR6 is connected to the other wire of the communications bus 1 and the base thereof connected to the output of an inverting amplifier 12 via a resistor R12, a source 13 of data signals being connected to the input of the inverter 12. The source 13 of data signals is also connected to the base of a transistor TR7 of the npn type via a resistor R13, the emitter of this transistor being connected to the low voltage side of the communications bus 1, and the collector being connected to the high voltage side of the communications bus via a resistor R14. Thus, the transistor TR7 effectively shunts the two wires of the communications bus 1.

In operation, the transistors TRS5 and TR6 operate to effect impedance modulation of the DC voltage source, and transistor TR7 is operable to effect voltage modulation of the DC source. More specifically, when the source 13 of data signals is high, then the output of the inverter 12 is low and thus transistor TR6 is switched off, whereby the impedance of the DC source is high. At the same time, the high data signal is applied to the base of the transistor TR7 to the resistor R13 and thus the transistor TR7 conducts and effectively shorts the communications bus 1 thus placing approximately zero volts on both wires of the bus. When the data signal is low, the inverted signal is high, whereby the transistors TR6 and TR5 conduct and the DC source impedance

7

is thus low. At the same time, the low data signal turns off the transistor TR7 so that the latter no longer shorts the communications bus 1, whereby a 12 volt voltage is applied across the communications bus so that power can be transmitted to the system masters and slaves 2 and 3, the bus controller 4, and the load 14. Thus by modulating the impedance and voltage high and low, the system components are provided with data. The information contained in such data transmission is normally directed at the electrical load to instruct the same not to drain power from the bus 1. Figure 8 illustrates how the voltage and impedance on the bus 1 are modulated together to provide this function, the waveform indicating the voltage with the corresponding values of the impedance Z being shown. It will be seen that signalling is provided by the high and low voltages and the (intermittent) power by those periods when the impedance is low.

Save for the voltage modulation effected in accordance with this aspect of the present invention, in addition to impedance modulation, the communications system is basically similar to that disclosed in Figures 1 to 6 of the drawings except that there is now a connection between the bus controller 4 and the power slave 5, this being indicated by broken line 15 in Figure 2, and the signal at the Tx terminal of IC2 in Figure 3 is the inverse of that at the Hi/Lo Z terminal.

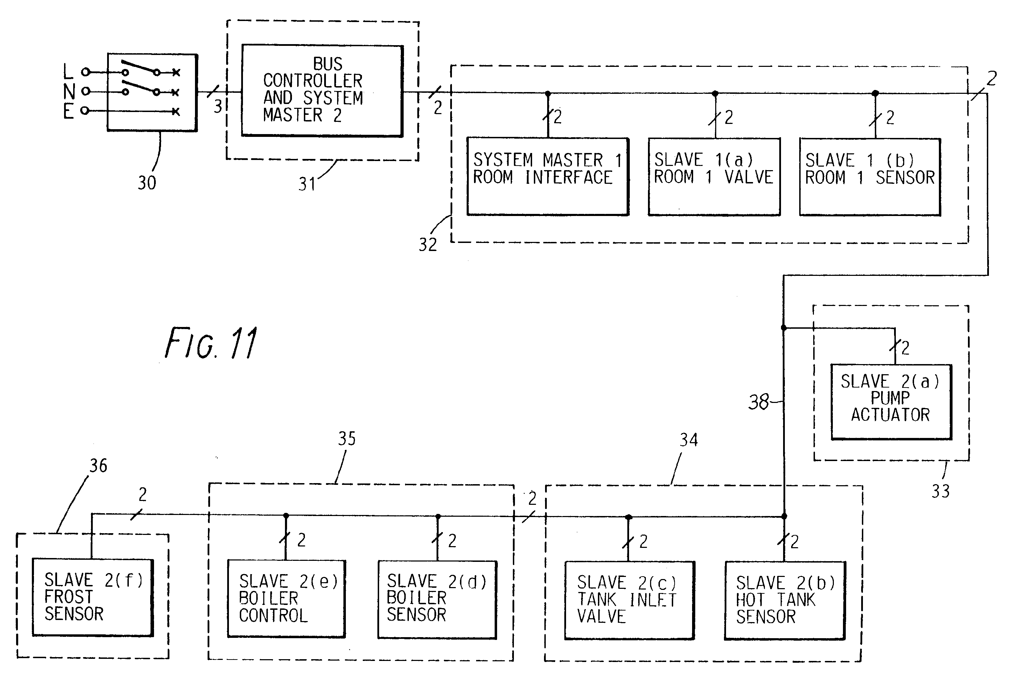

Figure 11 is a block diagram of a domestic central heating installation which incorporates the communications system of the present invention. The installation controls the temperature of the rooms throughout the house together with the hot water supply. The communications system is supplied with power from a mains isolator unit 30 connected to the mains supply. The communication system comprises 2 master/slave arrangements. Master 1 controls the measurement of, and bus power to, slaves 1(a) and 1(b) and Master 2 the same for slaves 2(a) through 2(f). Master/slave arrangement 1 controls the domestic room temperature and master/slave arrangement 2 the domestic hot water supply. Thus, sub-system 32 for the temperature control of the living-room has a system master 1 connected to bus 38 via a room interface unit and linked to two slaves, of which slave 1 (a) is a valve to control the flow of hot water into the room's radiator from the boiler and slave 1 (b) is a room sensor. The installation has a similar sub-system for each room requiring temperature control although, for simplicity, Figure 11 shows only that for the living-room.

The sub-system controlling the hot water supply has a system master 2, housed in the main control unit together with the bus controller and located in an under-stairs cupboard 31, a slave 2 (a) being the pump actuator located in any convenient site 33, slaves 2 (b) and 2 (c) located in the airing cupboard 34 and being the hot-water tank sensor and valve respectively, slaves 2 (d) and 2 (e) located in the kitchen 35 and being the boiler sensor and control respectively, and the slave 2 (f) being the frost sensor and located in any convenient place 36. Slaves 1(a), 2(a), 2(c) and 2(e) are power slaves.

Typical rating values for the components used in the system are as follows, with *indicating those requiring POWERCOMM:-

| Component | Power (Watts) | Current (Amps) | Response Time (Secs) |
|---|---|---|---|
| room valve* | 2 | 0.4 | 15 |
| room sensor | 0.05 | 0.005 | 0.002 |
| pump actuator* | 0.4 | 0.04 | 0.015 |
| hot tank sensor | 0.05 | 0.05 | 0.002 |
| hot tank inlet valve* | 2 | 0.4 | 15 |
| boiler control* | 0.4 | 0.04 | 0.015 |
| frost sensor | 0.05 | 0.005 | 0.002 |
| boiler sensor | 0.05 | 0.005 | 0.002 |

The basic scheduling procedure for the system is a 3 milli-second power transmission at 12 v and 2 A, and then a 5 milli-second data transmission at 12 V and less than 12 mA, with continuous cycling between these two transmission modes. This is adequate for charging and recharging of the capacitors associated with the various sensors mentioned above, but when driving of a valve or actuator is required, the bus controller causes a change in the scheduling to provide a variable period power transmission at 12 V and up to 6 A to provide direct driving of the appropriate device(s) (for example, a 15 second power transmission at 12 V and 0.4 Amp in the case of a room valve) followed by a 5 milli second data transmission at 12 V and less than 12 m A. The maximum number of devices which can be so driven is determined by the sum of the current rating not exceeding the current rating for TR4 or the current which can be drawn from the source; typically, TR4 has a 6 Amp rating adequate heat-sinking. Such action by the bus controller is initiated upon receipt of a signal from master 1 or master 2 requiring one or more of their slaves to be powered up.

Thus the system provides effective communication with a large number of components of widely varying characteristics in a number of separate locations.

One of various other components which may be also used in systems embodying the present invention whether for the domestic heating installation of Figure 10 or for other applications, includes a flashing beacon (typically with power of 1.2 Watts to be charged up at 100 milliAmps, 12 Volts for at least 1.5 seconds).

It will be seen that the present invention provides a relatively simple, and hence relatively inexpensive, system which permits a simple bus to be used for both power transmission and information transmission. The invention is, of course, capable of wide application but specific uses are in connection with domestic environment (heating) control systems and security systems.

## Claims

1. A D.C. power line communications system comprising a two-wire communications bus(1,38), a D.C. supply source (5) connected to the bus, a plurality of communication nodes (2,3) connected to the bus, means (4) for varying the D.C. source impedance of the bus between two values, whereby, when the bus D.C. source impedance is at the lower of said two values, power can be transmitted from the D.C. supply source to the communication nodes, characterised by means to transmit only data signals along the bus from one communication node to another when the bus is at the greater of the two D.C. source impedance values, the data-transmission means having means to send a low voltage signal by applying, across the bus, a D.C. impedance lower than the greater of the two bus D.C. source impedance values and also having means to send a high voltage signal by removing said D.C. impedance across the bus, the means for varying the source impedance comprising bus controller means (4) operable to schedule the bus between power and data transmissions, means (4) to provide temporal variation in the scheduling of the power and data transmission to permit operation of communication nodes of widely differing power loads, and storage means (C1) operable to store power when the bus source impedance is low, and to discharge stored power to at least one communication node when the bus source impedance is at the greater of said two values, whereby at least said one communication node is always connected to one power supply or another.

2. A system according to Claim 1, characterised in that the temporal variation means (4) comprises means to increase the duration of one or more power transmissions.

3. A system according to Claim 1 or 2, characterised in that the temporal variation means (4) comprises means to decrease the time separation between one or more power transmissions.

4. A system according to any of Claims 1 to 3, characterised in that the temporal variation means (4) is operable in accordance with instructions from the communications nodes.

5. A system according to any of the preceding Claims characterised by at least one DC load connected to the bus and having a first impedance value, means (4) for varying the DC source impedance between a second impedance value which is greater than said first impedance value and a third impedance value which is less than said first impedance value, and means for varying the voltage of the DC source between a first voltage level when the source impedance is at said second impedance value and a second voltage level when said source impedance is at said third impedance value, the second voltage level being greater than said first voltage level, whereby data can be transmitted along the bus in the presence of said DC load when the source impedance is modulated between said second impedance value and third impedance value and the source voltage is modulated between said first voltage level and second voltage level.

6. A system according to any of the preceding Claims characterised by means for modulating the voltage of the DC source, whereby an electrical load may be imposed on the communications bus.

7. A system according to any of the preceding Claims, characterised in that the bus controller means (4) comprises means to advise communication node(s) when data transmission can occur.

8. A system according to any of the preceding Claims characterised in that the bus controller means (4) is provided with transmission means and receiver means for communicating with the communication nodes, and data processor means operable to provide the timing for the periods of power transmission and the periods of data transmission.

9. A system according to any of the preceding Claims, characterised in that the means for varying the source impedance comprises transistor means which provides said first value of source impedance when rendered conductive and provide said second value of source impedance when rendered non-conductive.

10. A system according to any of the preceding claims, characterised in that the storage means comprise capacitive means for charging during power transmissions and discharging during data transmissions.


**Patentansprüche**

1. Gleichspannungs-Versorgungsleitungs-Dialogsystem aufweisend einen Zweileitungs-Dialogbus (1,38), eine an den Bus angeschlossene Gleichspannungsquelle (5), mehrere mit dem Bus verbundene Dialogpunkte (2,3), eine Einrichtung (4) zum Verändern der Impedanz der Gleichspannungsquelle für den Bus zwischen zwei Werten, wobei - wenn sich die Gleichspannungsquellen-Busimpedanz auf dem niedrigeren der beiden Werte befindet - Leistung von der Gleichspannungsquelle zu den Dialogpunkten übertragen werden kann, **gekennzeichnet durch** eine Einrichtung zum Übertragen von Datensignalen entlang des Busses von einem Dialogpunkt zu einem anderen nur dann, wenn sich der Bus auf dem größeren Impedanzwert der Gleichspannungsquelle befindet, wobei die Datenübertragungseinrichtung Mittel aufweist, um ein niedriges Spannungssignal zu senden, indem über dem Bus eine Gleichspannungsimpedanz geringer als der größere der beiden Gleichspannungsquellen-Busimpedanzwerte angelegt wird und wobei sie ferner Mittel aufweist, um ein hohes Spannungssignal zu senden, indem die Gleichspannungsquelle von dem Bus abgetrennt wird, wobei die Einrichtung zum Verändern der Quellimpedanz eine Bus-Steuereinrichtung (4) aufweist, die den Bus planmäßig zwischen Leistungs- und Datenübertragungen betätigt, eine Einrichtung (4), um eine zeitliche planveränderung für die Leistungs- und Datenübertragungen vorzugeben und den Betrieb der Dialogpunkte mit sehr unterschiedlichen Spannungsbelastungen vorzugeben, und eine Speichereinrichtung (C1) zur Leistungsspeicherung, wenn die Busquellenimpedanz gering ist und zur Leistungsabgabe an wenigstens einen Dialogpunkt, wenn sich die Busquellenimpedanz auf dem größeren der beiden werte befindet, wodurch der wenigstens eine Dialogpunkt immer mit der einen oder anderen Spannungsversorgungsquelle verbunden ist.

2. System nach Anspruch 1, **dadurch gekennzeichnet**, daß die zeitliche Veränderungseinrichtung (4) Mittel aufweist, um die Dauer einer oder mehrerer Leistungsübertragungen zu erhöhen.

3. System nach Anspruch 1 oder 2, **dadurch gekennzeichnet**, daß die zeitliche Veränderungseinrichtung (4) Mittel aufweist, um die zeitliche Trennung zwischen einer oder mehreren Leistungsübertragungen zu vermindern.

4. System nach einem der Ansprüche 1 bis 3, **dadurch gekennzeichnet**, daß die zeitliche Veränderungseinrichtung (4) entsprechend Befehlen von den Dialogpunkten betätigt wird.

5. System nach irgendeinem der vorangehenden Ansprüche, **gekennzeichnet durch** wenigstens eine an den Bus angeschlossene Gleichspannungslast mit einem ersten Impedanzwert, eine Einrichtung (4) zum Verändern der Gleichspannungs-Quellenimpedanz zwischen einem zweiten Impedanzwert, der größer als der erste Impedanzwert ist und einem dritten Impedanzwert, der kleiner als der erste Impedanzwert ist und eine Einrichtung zum Verändern der Spannung der Gleichspannungsquelle zwischen einem ersten Spannungspegel, wenn sich die Quellenimpedanz auf dem zweiten Impedanzwert befindet und einem zweiten Spannungspegel, wenn sich die Quellenimpedanz auf dem dritten Impedanzwert befindet, wobei der zweite Spannungspegel größer als der erste Spannungspegel ist, wodurch Daten über den Bus beim Vorliegen der Gleichspannungslast übertragen werden können, wenn die Quellenimpedanz zwischen dem zweiten und dem dritten Impedanzwert moduliert wird und die Quellenspannung zwischen dem ersten und dem zweiten Spannungspegel moduliert wird.

6. System nach irgendeinem dere vorangehenden Ansprüche, **gekennzeichnet durch** eine Einrichtung für die Modulation der Spannung der Gleichspannungsquelle, wodurch eine elektrische Last an den Dialogbus angelegt wird.

7. System nach irgendeinem der vorangehenden Ansprüche, **dadurch gekennzeichnet**, daß die Bus-Steuereinrichtung (4) Mittel aufweist, um dem bzw. den Dialogknoten mitzuteilen, wann eine Datenübertragung auftreten kann.

8. System nach irgendeinem der vorangehenden Ansprüche, **dadurch gekennzeichnet**, daß die Bus-Steuereinrichtung (4) mit Sende- und Empfangseinrichtungen für den Dialog mit den Dialogpunkten versehen ist und daß sie mit einer Prozessoreinrichtung versehen ist, die den Zeittakt für die Perioden der Leistungsübertragung und die Perioden der Datenübertragung vorgeben kann.

9. System nach irgendeinem der vorangehenden Ansprüche, **dadurch gekennzeichnet**, daß die Einrichtung zum Verändern der Quellimpedanz eine Transistoreinrichtung umfaßt, die den ersten Wert der Quellimpedanz im leitenden Zustand und den zweiten Wert der Quellimpedanz im nicht-leitenden Zustand vorgibt.

10. System nach irgendeinem der vorangehenden Ansprüche, **dadurch gekennzeichnet**, daß die Speichereinrichtung eine kapazitive Einrichtung umfaßt für die Aufladung während der Leistungsübertragungen und für die Entladung während der Datenübertragungen.

## Revendications

1. Système de communication sur ligne électrique à courant continu comprenant un bus de communication à deux fils (1,38), une alimentation à courant continu (5) connectée au bus, une pluralité de noeuds de communication (2,3) connectés au bus, un moyen (4) pour faire varier l'impédance de l'alimentation à courant continu du bus entre deux valeurs, d'où il résulte que lorsque l'impédance de l'alimentation à courant continu du bus est à la plus faible desdites deux valeurs, l'énergie peut être transmise à partir de l'alimentation à courant continu aux noeuds de communication, caractérisé par un moyen pour transmettre seulement des signaux d'information sur le bus à partir d'un noeud de communication à un autre lorsque le bus est à la valeur la plus élevée des deux valeurs d'impédance de l'alimentation à courant continu, les moyens de transmission de données comportant un moyen pour émettre un signal basse tension en appliquant, aux bornes du bus, une impédance en courant continu inférieure à la valeur d'impédance la plus grande parmi les deux valeurs d'impédance de l'alimentation à courant continu du bus et également un moyen pour envoyer un signal haute tension en enlevant ladite impédance en courant continu aux bornes du bus, le moyen pour faire varier l'impédance de l'alimentation comprenant un moyen de contrôleur de bus (4) que l'on peut mettre en oeuvre pour cadencer sur le bus la transmission de l'énergie et des données, un moyen (4) pour assurer la variation temporelle dans le cadencement de la transmission de l'énergie et des données afin de permettre le fonctionnement des noeuds de communication de charges d'utilisation différant grandement et un moyen d'accumulation (1) que l'on peut mettre en oeuvre pour accumuler l'énergie lorsque l'impédance de l'alimentation du bus est basse et pour décharger l'énergie accumulée vers au moins un noeud de communication lorsque l'impédance de source de bus est à la valeur la plus grande desdites deux valeurs, d'où il résulte qu'au moins ledit noeud de communication est toujours connecté à une alimentation ou à l'autre.

2. Système selon la revendication 1, caractérisé en ce que le moyen de variation temporelle (4) comprend un moyen pour augmenter la durée d'une ou plusieurs transmissions d'énergie.

3. Système selon la revendication 1 ou 2, caractérisé en ce que le moyen de variation temporelle (4) comprend un moyen pour diminuer l'intervalle de temps entre une ou plusieurs transmissions d'énergie.

4. Système selon l'une quelconque des revendications 1 à 3, caractérisé en ce que le moyen de variation temporelle (4) peut être mis en oeuvre en conformité avec des instructions provenant des noeuds de communication.

5. Système selon l'une quelconque des revendications précédentes, caractérisé par au moins une charge continue connectée au bus et ayant une première valeur d'impédance, un moyen (4) pour faire varier l'impédance de la source à courant continu entre une seconde valeur d'impédance qui est supérieure à ladite première valeur d'impédance et une troisième valeur d'impédance qui est inférieure à ladite première valeur d'impédance et un moyen pour faire varier la tension de l'alimentation à courant continu entre un premier niveau de tension lorsque l'impédance de la source est à ladite seconde valeur d'impédance et un second niveau de tension lorsque ladite impédance de la source est à ladite troisième valeur d'impédance, le second niveau de tension étant supérieur audit premier niveau de tension, d'où il résulte que les données peuvent être transmises sur le bus en la présence de ladite charge continue lorsque l'impédance de la source est modulée entre ladite seconde valeur d'impédance et ladite troisième valeur d'impédance et la tension de la source est modulée entre ledit premier niveau de tension et ledit second niveau de tension.

6. Système selon l'une quelconque des revendications précédentes, caractérisé par un moyen pour moduler la tension de la source à courant continu, d'où il résulte qu'une charge électrique peut être imposée sur le bus de communication.

7. Système selon l'une quelconque des revendications précédentes, caractérisé en ce que le moyen de contrôleur de bus (4) comprend un moyen pour avertir le noeud ou les noeuds de communication lorsqu'une transmission de données peut se produire.

8. Système selon l'une quelconque des revendications précédentes, caractérisé en ce que le moyen de contrôleur de bus (4) est muni d'un moyen d'émission et d'un moyen de récepteur pour communiquer avec les noeuds de communication et d'un moyen de processeur de données qui peut être mis en oeuvre pour procurer le cadencement des périodes de transmission d'énergie et des périodes de transmission de données.

9. Système selon l'une quelconque des revendications précédentes, caractérisé en ce que le moyen pour faire varier l'impédance de la source comprend un moyen de transistor qui procure ladite première valeur d'impédance de la source lorsqu'il est rendu conducteur et procure ladite seconde valeur d'impédance de la source lorsqu'il est rendu non conducteur.

10. Système selon l'une quelconque des revendications précédentes, caractérisé en ce que les moyens d'accumulation comprennent un moyen capacitif pour le chargement pendant les transmissions d'énergie et le déchargement pendant les transmissions de données.

240V
LINE

5

BUS
CONTROLLER

4

SYSTEM
MASTER 1     2

SYSTEM
SLAVE     3

*FIG. 1*

1

3     SYSTEM
SLAVE

2     SYSTEM
MASTER 2

BUS
CONTROLLER

4

1

SYSTEM
MASTER     2

SYSTEM
MASTER     2

*FIG. 2*

SLAVE

SLAVE

SLAVE

SLAVE

3     3     15     3     3

POWER
SLAVE     5

EP 0 360 543 B1

FIG. 3

FIG. 4

EP 0 360 543 B1

FIG. 5

POWER    SIGNALLING    POWER    SIGNALLING    POWER    SIGNALLING    POWER

12V

0V

COMMSEN            COMMSEN            COMMSEN            COMMSEN

3ms        5ms        3ms        5ms        3ms        5ms        3ms

EP 0 360 543 B1

LOGIC
HIGH

|← ——120µs——— →|

|←——120µs——→|

LOGIC
LOW

|←——120µs——→|

'1' BIT

*FIG. 6*

|←——120µs——→|

|←——120µs——→|

'0' BIT

V_DC

Rsig

TR5

*FIG. 7*

R11

12

R12

TR6

1

R14

13

R13

TR7

14

0v

FIG. 8

FIG. 9

Token passing
between System
Masters

①

Bus control token passed
to system Master

comms frame
sent to
slave ②

Slave
programmed
to respond to a
'PWRDEVON comms
frame from the
Bus controller.

Slave

System Master
decides some of
its slaves require
power
(sensor reading)

Master

Acknowledge
frame sent
back to Master
(slave is now
enabled for power) ④

③

'PWRDEVON' frame
transmitted to slaves

⑤

'Power Required' frame
sent to bus controller

Bus Controller
transmits a 'PWRDEVON'
frame + causes the
enabled slaves to
connect their power
devices to the bus

Bus Controller

'PWRDEVOFF' frame
transmitted to the
slaves and disables
them

⑥

NULL frame sent to
Master to indicate
the end of 'PWRCOM'

⑦

Bus Controller checks
that the bus is loaded
and after the appropriate
delay (device dependent)
transmits a 'PWRDEVOFF'
frame by modulating the
bus source impedance

⑧      Bus Controller

Return to
token passing
scheme

⑩

⑨

Bus controller times
out and checks the
bus to ensure it is
unloaded. If unloaded
Power/Comms  scheduling
re-commences NULL
frame sent to
master

FIG.10

Bus Controller

19

FIG. 11

EP 0 360 543 B1